# EUROPEAN PATENT APPLICATION

(11) **EP 4 297 018 A1**
(43) Date of publication of application: **27.12.2023**
(21) Application number: 23181078.9
(22) Date of filing: 22.06.2023
(51) Int. Cl.: G10L 13/033, G06F 21/62

(54) **TECHNIQUES FOR PRESENTING TEXTUAL MESSAGES USING A USER-SPECIFIC VOICE MODEL**

(30) Priority: 22.06.2022 US 202263354648 P; 16.09.2022 US 202263407544 P; 13.01.2023 US 202318154778
(71) Applicant: Meta Platforms Technologies, LLC, Menlo Park, CA 94025 (US)
(72) Inventor: ZIMMERMAN, Jared, California, 94025 (US)
(74) Representative: Murgitroyd & Company

(57) **Abstract**

A method of selectively using a user-specific synthesized voice to audibly present a textual message includes receiving, at a receiving electronic device associated with a receiving user, a first textual message sent by a first sending user of a first sending electronic device. The method further includes, after receiving a request to have the first textual message audibly presented, causing, by the receiving electronic device, an audible presentation of the first textual message using a user-specific synthesized voice representing the first sending user if the receiving user is authorized to access the user-specific synthesized voice. The method additionally includes receiving, at the receiving electronic device, a second textual message sent by a second sending user. The method further includes, after receiving a request to have the second textual message audibly presented via the receiving electronic device, causing an audible presentation of the second textual message using a default voice.

## Description

### RELATED APPLICATIONS

This application claims the benefit of U.S. Provisional Patent App. No. 63/354,648 (filed June 22, 2022) and U.S. Provisional Patent App. No. 63/407,544 (filed Sept. 16, 2022), and each of these provisional applications is incorporated by reference herein in its respective entirety.

### TECHNICAL FIELD

The present disclosure relates generally to user-specific voice models and passive data collection. In particular, the present disclosure relates to the presentation of a textual message using a user-specific voice model, as well as passive data collection for purposes of training voice models.

### BACKGROUND

Over the past decade or so, text-based communication has overtaken voice-based communication as the number one form of communication. More and more, people are connecting with their friends and families via text messages, instant messages, and emails - rather than through in-person conversations or even phone calls.

While text-based communication is oftentimes more convenient than voice-based communication, it can be impersonal, which leads to misunderstandings or misinterpretation. Accordingly, there is a need for a new form of communication that allows for the convenience of text-based communication while also incorporating the more sympathetic nature of voice-based communication.

Additionally, and somewhat relatedly, many difficulties surround current systems for collecting user-specific voice and video data. For example, for purposes of creating a user-specific voice model, a user may need to speak into a microphone (e.g., while sitting in front of a computer) for an extended period of time to generate the data necessary to train a proper voice model. Current technologies require a user to record at least ten minutes' worth of voice data to create an accurate voice model from the ground up. In some of these current technologies, the required amount of voice data can be decreased by using a pre-trained voice model (e.g., a model trained with voices similar to that of the user). Regardless, the recording process can be tedious - not to mention time-consuming. Accordingly, a less demanding, more passive way of collecting voice and video data is needed.

### SUMMARY

The wrist-wearable devices, head-worn wearable devices, other types of electronic devices, and methods of use thereof (as well as systems including both wrist-wearable and head-worn devices, and other types of electronic devices) described herein address one or more of the aforementioned drawbacks by allowing for passive creation of user-specific synthesized voices and by authorizing other users to make use of those user-specific synthesized voices (e.g., to read back text messages received while a user is driving, and the voice that reads back the text messages can be one that represents a respective voice of a respective sending user). Two specific aspects are briefly summarized below.

A first method relates to selectively using a user-specific synthesized voice to audibly present a textual message. This first method allows for a user to listen to a received textual message in a voice approximating the sound of the sending user's voice. As described in more detail below, the method does not sacrifice the personability often lost with text-based communication mediums. It allows the receiving user to feel as if they are hearing the message read to them by the sending user. One example of this first method is provided in the clauses beginning with A that follow below.

(A1) In some embodiments, an example first method of selectively using the user-specific synthesized voice to audibly present the textual message includes receiving, at a receiving electronic device associated with a receiving user, a first textual message sent by a first sending user of a first sending electronic device. The method further includes, after receiving a request to have the first textual message audibly presented via the receiving electronic device, causing, by the receiving electronic device, an audible presentation of the first textual message using a user-specific synthesized voice representing the first sending user in accordance with a determination that the receiving user is authorized to access the user-specific synthesized voice representing the first sending user. The method additionally includes receiving, at the receiving electronic device associated with the receiving user, a second textual message sent by a second sending user of a second sending electronic device. The method also includes, after receiving a request to have the second textual message audibly presented via the receiving electronic device, causing, by the receiving electronic device, an audible presentation of the second textual message using a default voice.

(A2) In some embodiments of the method of A1, receiving the first textual message further comprises receiving an indication from the first sending electronic device that the receiving user is authorized to access the user-specific synthesized voice representing the first sending user. In other words, execution of the method of A2 helps to provide further guidance to the user as to why (and whether) the user-specific synthetized voice is being offered at all (e.g., the indication can be utilized by the receiving device to then provide additional notifications or other information to the user), which helps to promote improved man-machine interfaces and sustained interactions by ensuring that users are provided with this additional guidance as to access and use of user-specific synthesize voices as this additional feature might otherwise be avoided or buried within various user interfaces that can be difficult and burdensome to locate and utilize (difficult and burdensome-to-locate features can lead to inefficiently utilized devices that more quickly wear down batteries).

(A3) In some embodiments of the method of any of A1-A2, the request to have the first textual message audibly presented via the receiving electronic device includes a request to have the first textual message audibly presented using the user-specific synthesized voice representing the first sending user.

(A4) In some embodiments of the method of any of A1-A3, causing the audible presentation of the first textual message using the user-specific synthesized voice includes identifying an explicit characteristic of the first textual message and varying a prosody of the audible presentation based on the explicit characteristic of the first textual message.

(A5) In some embodiments of the method of any of A1-A4, causing the audible presentation of the first textual message using the user-specific synthesized voice includes identifying an implied characteristic of the first textual message and varying a prosody of the audible presentation based on the implied characteristic of the first textual message.

(A6) In some embodiments of the method of any of A1-A5, causing the audible presentation of the first textual message using the user-specific synthesized voice includes identifying a characteristic of an additional textual message in a conversation that includes the first textual message. Causing the audible presentation further includes varying a prosody of the audible presentation based on the characteristic of the additional textual message. The use of prosody to further vary audible presentation based on the characteristic of the additional message leads to a more authentic and personal conveyance of the content of the textual messages (which then facilitates sustained interactions to have more engaged and fluid conversations with other users).

(A7) In some embodiments of the method of any of A1-A6, the user-specific synthesized voice is synthesized by the receiving electronic device.

(A8) In some embodiments of the method of any of A1-A6, the user-specific synthesized voice is synthesized by the sending electronic device.

(A9) In some embodiments of the method of any of A1-A6, the user-specific synthesized voice is synthesized by a device other than the receiving electronic device and the sending electronic device.

(A10) In some embodiments of the method of any of A7-A9, the user-specific synthesized voice is synthesized using a voice model that is encrypted to disallow uses of the voice model for purposes other than audibly presenting the first textual message.

(A11) In some embodiments of the method of any of A1-A10, the determination that the receiving user is authorized to access the user-specific synthesized voice representing the first sending user includes authenticating an identity of the receiving user.

(A12) In some embodiments of the method of any of A1-A11, the determination that the receiving user is authorized to access the user-specific synthesized voice representing the first sending user is based on a strength of a relationship between the receiving user and the first sending user.

(A13) In some embodiments of the method of any of A1-A12, the determination that the receiving user is authorized to access the user-specific synthesized voice representing the first sending user includes determining that the first sending user has granted the receiving user permission to access the user-specific synthesized voice.

(A14) In some embodiments of the method of any of A1-A13, causing the audible presentation of the second textual message using the default voice includes foregoing determining whether the receiving user is authorized to access a user-specific synthesized voice representing the second sending user.

(A15) In some embodiments of the method of A14, the second textual message comprises a textual message sent on behalf of a non-human entity.

(A16) In some embodiments of the method of any of A14-A15, the receiving user has requested to have textual messages audibly presented using the default voice.

(A17) In another aspect, a non-transitory, computer-readable storage medium is provided. The non-transitory, computer-readable storage medium includes instructions that, when executed by an electronic device, cause the electronic device to perform or cause performance of the method of any of A1-A16.

(A18) In yet another aspect, an electronic device is provided. In some embodiments, the electronic device includes means for performing or causing performance of the method of any of A1-A16. In some embodiments, the electronic device includes one or more processors, and the one or more processors include instructions that, when executed, cause the electronic device to perform the method of any of A1-A16.

A second method that allows for creation of the user-specific synthesized voice is also provided. This second method is for passively collecting training data, which allows for an everyday user to generate the significant amount of data required to, for example, create a voice model (e.g., a personalized voice model associated with their voice and able to mimic the ways in which they vary the prosody of their voice). The passive voice collection method includes determining whether the user opted-in to the feature, to respect and preserve the privacy of the user. One example of this second method is provided in the clauses beginning with B that follow below.

(B1) In some embodiments, the method of passively collecting training data includes receiving an opt-in instruction. The opt-in instruction represents a user consenting to collection of training data associated with the user via one or more electronic devices. The method further includes, after receiving the opt-in instruction and in accordance with a determination that the user is speaking based on data collected by the one or more electronic devices, providing audio data that includes the user speaking as a training input to a voice model specific to the user.

(B2) In some embodiments of the method of B1, receiving the opt-in instruction from the user includes presenting the user with an option to opt-in to the collection of training data or determining that the user already opted-in to the collection of training data.

(B3) In some embodiments of the method of any of B1-B2, the data collected by the one or more electronic devices includes video data.

(B4) In some embodiments of the method of B3, the video data is captured using a camera of the one or more electronic devices.

(B5) In some embodiments of the method of any of B1-B4, the data collected by the one or more electronic devices includes audio data.

(B6) In some embodiments of the method of B5, the audio data is captured using a microphone of the one or more electronic devices.

(B7) In some embodiments of the method of any of B3-B6, the data collected by the one or more electronic devices is processed to allow for detecting a characteristic of the user while the user was speaking.

(B8) In some embodiments of the method of B7, the characteristic of the user includes a prosodic characteristic associated with the user while the user is speaking, and the prosodic characteristic is provided as an additional training input to the voice model specific to the user.

(B9) In some embodiments of the method of B7, the characteristic of the user includes a facial expression associated with the user while the user is speaking, and the method further includes providing the facial expression of the user as an additional training input to the voice model specific to the user.

(B10) In some embodiments of the method of any of B3-B9, the determination that the user is speaking includes at least one of: comparing the audio data against pre-authenticated audio data associated with an identity of the user, and comparing the video data against pre-authenticated video data associated with the identity of the user.

(B11) In some embodiments of the method of any of B1-B10, the method further includes, after receiving the opt-in instruction and in accordance with the determination that the user is speaking based on the data collected by the one or more electronic device, providing video data that includes the user speaking as a training input to the voice model specific to the user.

(B 12) In some embodiments of the method of any of B 1-B 11, providing the audio data includes collecting first audio data from a first electronic device of the one or more electronic devices. Also, providing the audio data includes collecting second audio data from a second electronic device of the one or more electronic devices. Additionally, providing the audio data includes providing the first audio data and the second audio data as at least one respective training input for the voice model specific to the user.

(B13) In some embodiments of the method of any of B1-B12, the voice model specific to the user is created locally on the one or more electronic devices.

(B14) In some embodiments of the method of any of B1-B13, the voice model specific to the user is created on a device on a same local network as the one or more electronic devices.

(B15) In some embodiments of the method of any of B1-B14, the voice model specific to the user is not transferred to or created at a server on a network remote from the one or more electronic devices.

(B16) In some embodiments of the method of any of B1-B15, the voice model specific to the user is used to generate a user-specific synthesized voice.

(B17) In some embodiments of the method of any of B1-B16, the method further includes providing one or more non-human sound samples as a training input for the voice model that is specific to the user.

(B18) In another aspect, a non-transitory, computer-readable storage medium is provided. The non-transitory, computer-readable storage medium includes instructions that, when executed by an electronic device, cause the electronic device to perform or cause performance of the method of any of B 1-B 17.

(B19) In yet another aspect, an electronic device is provided. In some embodiments, the electronic device includes means for performing or causing performance of the method of any of B1-B17. In some embodiments, the electronic device includes one or more processors, and the one or more processors include instructions that, when executed, cause the electronic device to perform the method of any of B1-B17.

Additional examples are explained in further detail below.

### BRIEF DESCRIPTION OF THE DRAWINGS

A more particular description may be had by reference to the features of various embodiments, some of which are illustrated in the appended drawings. The appended drawings illustrate pertinent example features of the present disclosure. The description may admit to other effective features as the person of skill in the art will appreciate upon reading this disclosure.
Figures 1A and 1B illustrate an example settings screen that can be used to configure access to and use of user-specific synthesized voices for a messaging application, in accordance with some embodiments.
Figures 2A and 2B illustrate an example of the use of user-specific synthesized voices to read back textual messages in a hands-free environment, in accordance with some embodiments.
Figures 3A-3D illustrate a wrist-wearable device (e.g., smartwatch) reading back text messages to a user using a user-specific synthesized voice or a default voice, in accordance with some embodiments.
Figure 4 illustrates a user interface of a messaging application and includes schematic representations showing how messages can be read back using user-specific synthesized voices, in accordance with some embodiments.
Figure 5 illustrates an example communication network that can be used to facilitate access to voice models used to create various user-specific synthesized voices, in accordance with some embodiments.
Figure 6 illustrates a high-level architectural diagram as to how input data can be provided to create a user-specific synthesized voice model that can then be used to produce voice clips, in accordance with some embodiments.
Figure 7 illustrates a method of using a user-specific synthesized voice to read back a textual message (on right) side-by-side with user interface elements (on left) that are caused to presented as an electronic device (e.g., a wrist-wearable device) executes the depicted method, in accordance with some embodiments.
Figure 8 is a detailed flow diagram of a method of selectively using a user-specific synthesized voice to audibly present a textual message, according to some embodiments.
Figure 9 illustrates an example information overlay that can be presented to provide information to users concerning passive voice collection, in accordance with some embodiments.
Figure 10 illustrates a user conducting a video call via a computer, in accordance with some embodiments.
Figure 11 is a detailed flow diagram of a method of passively collecting training data used to create a voice model that is specific to a user, in accordance with some embodiments.
Figure 12 illustrates an example communication network that can be used for collection of data (e.g., audio data, video data) for training of a voice model, in accordance with some embodiments.

In accordance with common practice, like reference numerals denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by these features and aspects specifically related to the claims. Furthermore, well-known processes, components, and materials have not necessarily been described in exhaustive detail so as to avoid obscuring pertinent aspects of the embodiments described herein.

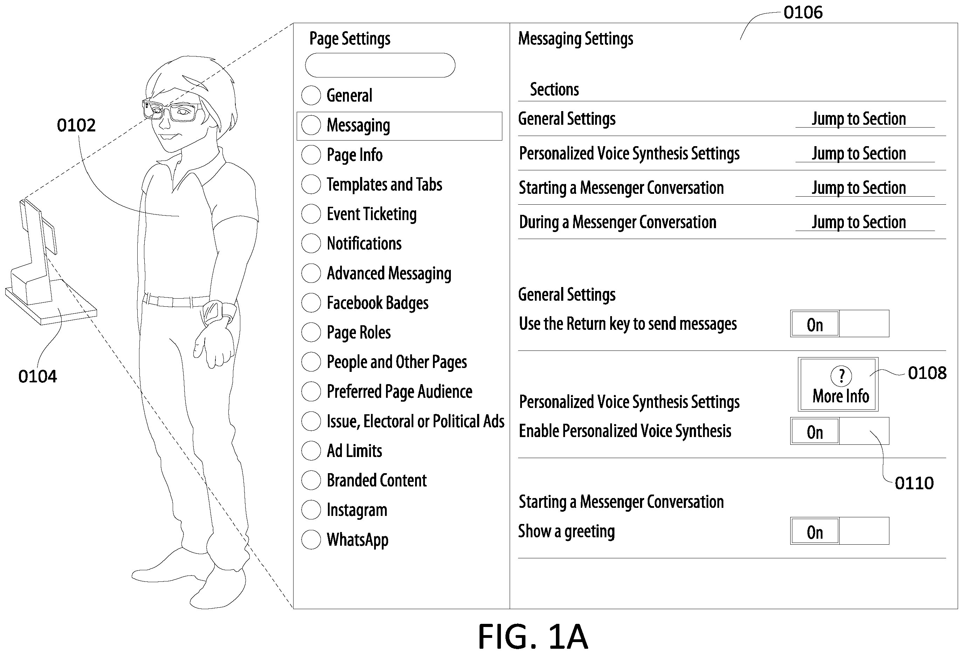

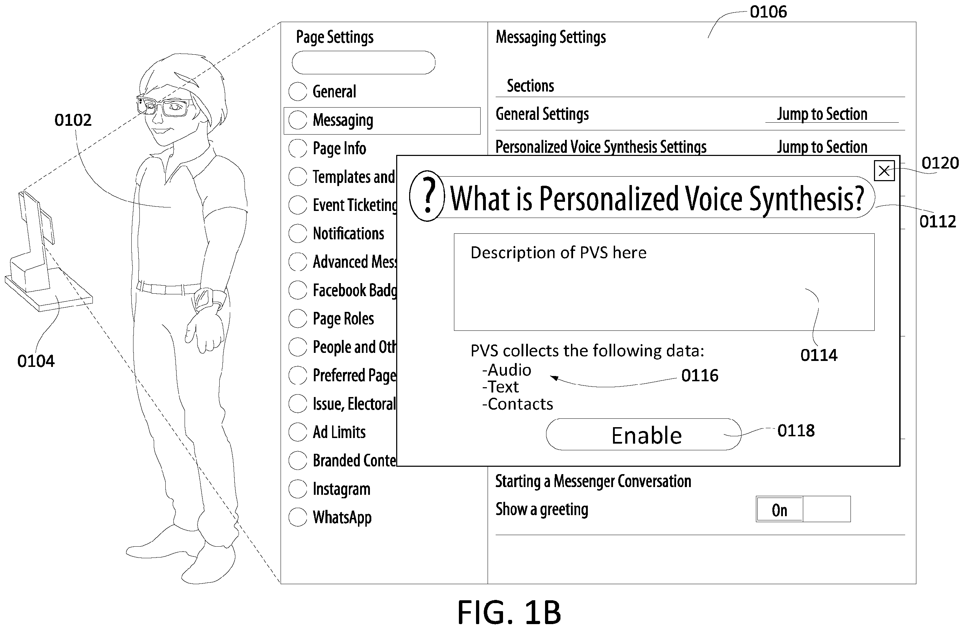

Figures 1A and 1B illustrate an example settings screen that can be used to configure access to and use of user-specific synthesized voices for a messaging application, in accordance with some embodiments. As shown in Figure 1A, in some embodiments, a videoconference device 0104 (e.g., a Facebook Portal) displays to a user 0102 a settings screen 0106. The settings screen 0106 can include an option 0110 to enable a personalized voice synthesis feature (e.g., a slider bar, a button, etc.). Additionally, the settings screen 0106 can include a link 0108 that leads to more information regarding the personalized voice synthesis feature. As shown in Figure 1A, the link may include text such as "More Info." Alternatively, the link may include text such as "Learn More," "What is Personalized Voice Synthesis?," or "Help."

For example, if the user 0102 selects the link 0108, the device 0104 can display an information overlay 0112, as shown in Figure 1B. The information overlay 0112 can include a description 0114 of the personalized voice synthesis feature. The information overlay 0112 can also include a notice 0116 of the various types of data (e.g., audio data, text message data, contacts, etc.) collected to enable the personalized voice synthesis feature. Additionally, the information overlay 0112 can include an option 0118 to enable the personalized voice synthesis feature (e.g., a slider bar, a button, etc.). In some embodiments, the option 0118 displayed within the information overlay 0112 is a singular option (e.g., an "Enable" button). In other embodiments, the option 0118 includes more fine-tuned controls for the user 0102 to selectively enable certain aspects of the personalized voice synthesis feature. For example, the option 0118 may allow the user 0102 to enable the personalized voice synthesis feature for messages received from other users. As another example, the option 0118 may allow the user 0102 to enable the personalized voice synthesis feature for messages sent to other users. Finally, the information overlay 0112 can include an option 0120 to close the overlay (e.g., an "X" button).

In addition to displaying the information overlay 0112 after the user selects the link 0108, the device can also display the information overlay 0112 after the user selects the option 0110 to enable the personalized voice synthesis feature. For example, if the user 0102 has never enabled the personalized voice synthesis feature before, the device 0104 can display the information overlay 0112 in order to notify the user 0102 what the personalized voice synthesis feature entails, which allows the user to then make an informed decision as to whether to make use of the feature or to decline to do so. In some embodiments, the feature is disabled by default and users must affirmatively opt-in to make use of the feature. Similarly, if the user 0102 has not enabled the personalized voice synthesis feature for a long time (e.g., six weeks, two months, one year, etc.), the device 0104 can display the information overlay 0112 to remind the user 0102 what the personalized voice synthesis feature entails (and, in some embodiments, can request a new opt-in to confirm the user's desire to continue using the feature). Alternatively, the device 0104 can display the information overlay 0112 each time the user selects the option 0110 to enable the personalized voice synthesis feature.

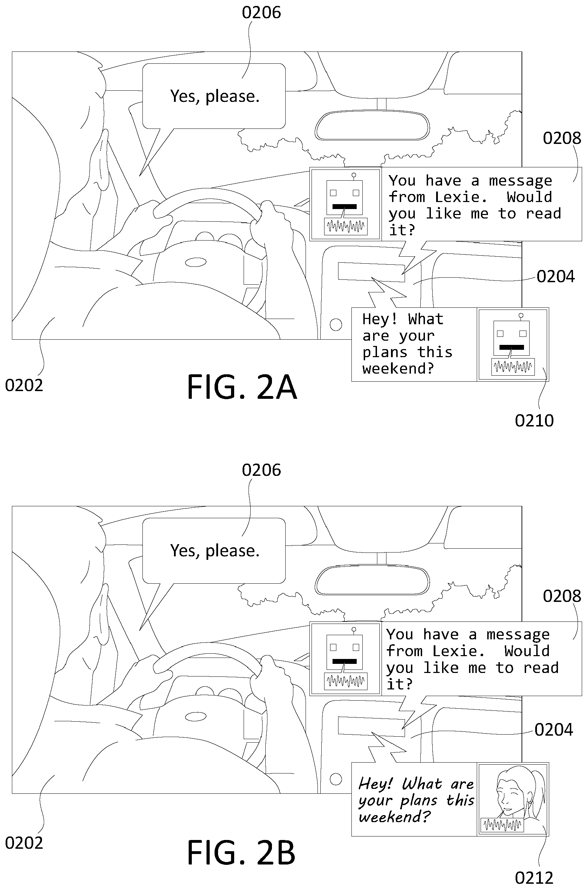

Figures 2A and 2B illustrate an example of the use of user-specific synthesized voices to read back textual messages in a hands-free environment, in accordance with some embodiments. In some embodiments, an interface 0204 of a vehicle (e.g., a car, a boat, etc.) notifies a user 0202 of a message (e.g., an unread message, an unanswered message, etc.). For example, as illustrated in Figure 2A, the notification says, "You have a message from Lexie."

The interface 0204 can notify the user of the message by presenting audio via a speaker (e.g., a speaker of the vehicle, a headset of the user 0206, etc.). Or the interface 0204 can notify the user 0202 via a display (e.g., a screen of the interface 0204, etc.). The interface 0204 can notify the user 0202 in response to a prompt from the user 0202. For example, the user 0202 may ask, "Do I have any unread messages?" Alternatively, the speaker 0204 can notify the user 0202 without prompting from the user 0202 (e.g., periodically such as every two hours, or after each message is received, etc.).

In some embodiments, the notification 0208 includes a prompt to determine whether the interface 0204 should read (e.g., audibly present) the text of the message to the user 0202. For example, as illustrated in Figure 2A, the notification says, "Would you like me to read [the message]?" If a response 0206 of the user 0202 indicates that the user 0202 would like the message read back to them, the interface 0204 can then audibly present the message to the user 0202.

In some embodiments, the interface 0204 reads the message to the user using a default voice (e.g., a generic male voice, a generic female voice, a generic gender-neutral voice, etc.). This is illustrated by the default reading 0210 of Figure 2A. As with the notification 0208, the default reading 0210 is illustrated with a computer-like font to visually indicate that the reading is performed using the default voice. (Note, the response 0206 of the user 0202 uses a font different from that of the notification 0208 and the default reading 0210, which provides a visual indication showing that different voices are being utilized to read back messages.) The default reading 0210 also includes an image of a robot to provide another visual indication that the reading is performed using the default voice.

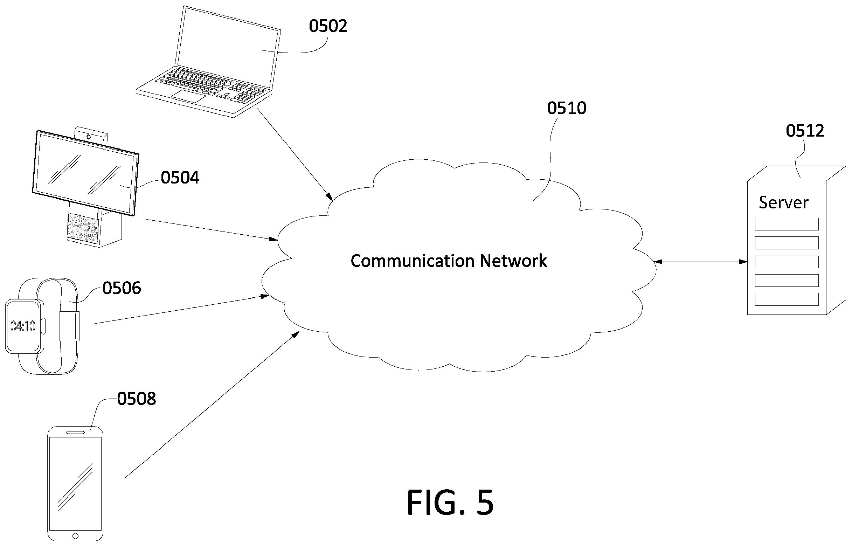

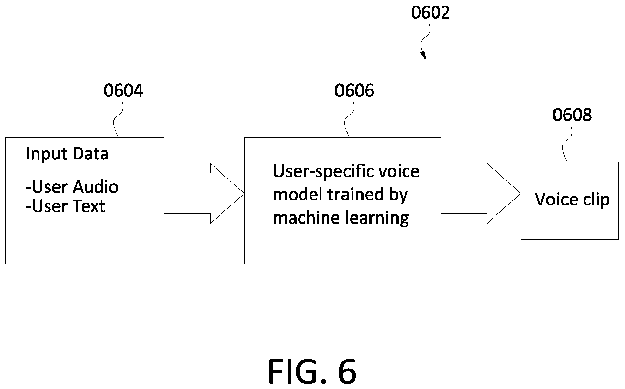

In other embodiments, the interface 0204 reads the message to the user using a personalized voice (e.g., a voice that sounds like the voice of the sending user, which can be referred to as a user-specific synthesized voice). This is illustrated by the personalized reading 0212 of Figure 2B. Unlike the notification 0208 and the default reading 0210 of Figure 2A, the personalized reading 0212 is visually depicted using an expressive font to indicate that the reading is performed with a personalized voice (e.g., the personalized voice can be generated using the architecture shown in Figure 6, as well as one or more of the devices shown in Figure 5). The personalized reading 0212 also includes an image of the sender to further visually indicate that the reading is performed using the personalized voice.

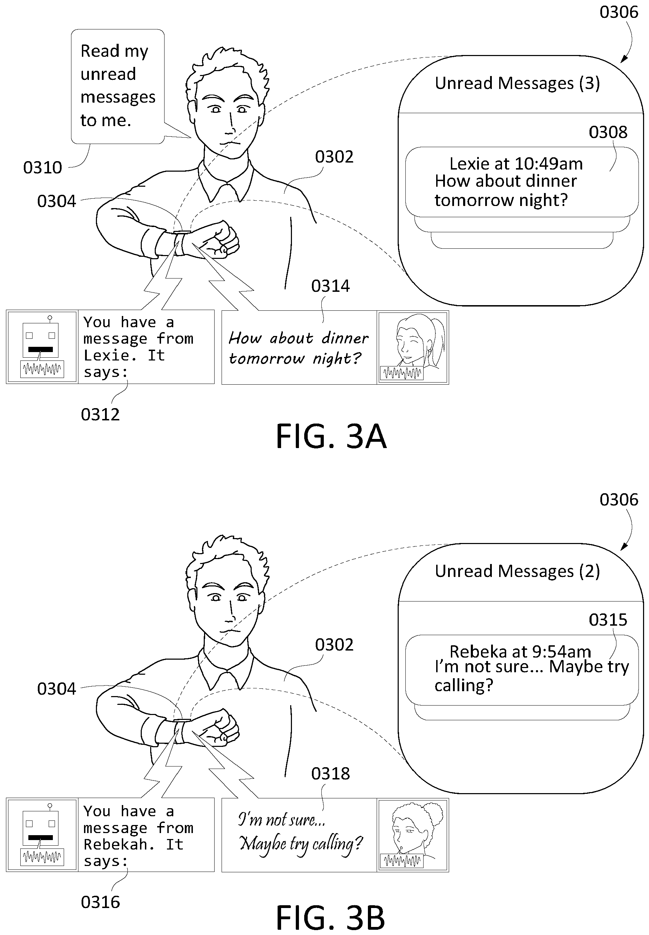

Figures 3A-3D illustrate a wrist-wearable device 0314 (e.g., smartwatch) reading back text messages 0308, 0314, and 0320 to a user 0302 using a user-specific synthesized voice or a default voice, in accordance with some embodiments. As illustrated in Figure 3A, in some embodiments, a user 0302 requests that his smartwatch 0304 read his unread messages to him. This is indicated by the speech bubble 0310, which can be a verbal instruction provided by the user to the smartwatch 0304, which verbal instruction can be "Read my unread messages to me." In some embodiments, the user 0302 requests that his smartwatch 0304 read his most recent messages to him. In some embodiments, the user 0302 requests that his smartwatch 0304 read a particular type of message (e.g., emails, instant messages, etc.) to him.

In Figure 3A, the user 0302 requests that his smartwatch 0304 read messages to him. However, in some embodiments, the user 0302 requests that a smartphone, a smart speaker, a videoconference device (e.g., a Facebook Portal), or a computer (e.g., a laptop computer) read messages to him. Further, Figure 3A shows the user 0302 verbally requesting that his smartwatch 0304 read messages to him. In some embodiments, the user 0302 makes the request other than by a verbal request (e.g., via touch input, a keyboard input, mouse input, motion input, etc.).

In some embodiments, a display 0306 of the smartwatch 0304 indicates that the user 0310 has unread messages. For example, in Figure 3A, the display 0306 indicates that the user has three unread messages. In some embodiments, the display 0306 also displays at least a portion of the text of an unread message 0308 of the unread messages. For example, in Figure 3A, the display 0306 displays a message from Lexie that reads, "How about dinner tomorrow night?" The display 0306 also includes a timestamp that reads, "10:49 AM." The timestamp can indicate the time that the message 0308 was received, or the timestamp can indicate the time the message was sent.

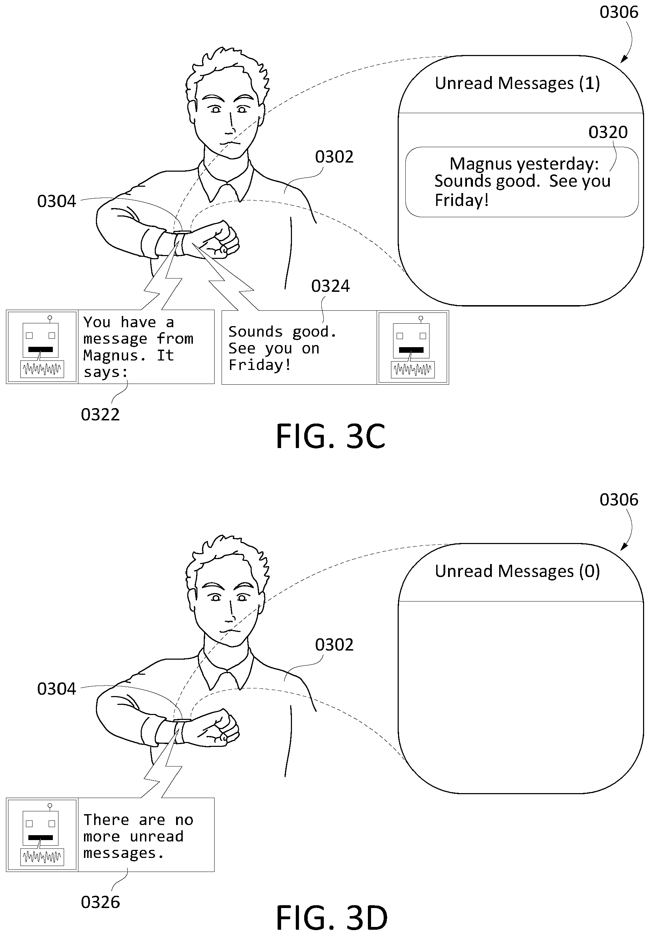

In some embodiments, after the user 0302 requests that his smartwatch 0304 read his unread messages to him, the smartwatch 3012 indicates that the user 0302 has an unread message 0308 from a sending user. In Figure 3A, this is indicated by the speech bubble 3012, which reads, "You have a message from Lexie. It says: ...." Similarly, speech bubbles 0316 of Figure 3B and 0322 of Figure 3C indicate that the user has other unread messages.

In some embodiments, after the user 0302 requests that his smartwatch 0304 read his unread messages to him, the smartwatch reads (e.g., presents, plays, etc.) a first unread message 0308 to the user. This is indicated by the speech bubble 0314. As with the personalized reading 0212 of Figure 2B, the speech bubble 0314 includes an expressive font to visually indicate that the smartwatch is reading the content of the first unread message 0308 using a personalized voice. By contrast, the speech bubble 3012 includes a computer-like font to visually indicate that the smartwatch 0304 informs the user 0302 of the first unread message 0308 using a default voice. The speech bubble 0314 also includes an image of the sending user to further visually indicate that the content of the first unread message 0308 is read in a personalized voice. As is also shown in Figure 3A, an introductory part 0312 can be read in the default voice, followed by a reading of the message content 0314 in a user-specific synthesized voice.

Turning now to Figure 3B, in some embodiments, after the smartwatch 0304 reads the first unread message 0308, the smartwatch reads a second unread message 0315 to the user. This is indicated by the speech bubble 0318. As with the speech bubble 0314 of Figure 3A, the speech bubble 0318 includes an expressive font to visually indicate that the smartwatch is reading the content of the second unread message 0315 using a personalized voice. By contrast, the speech bubble 3012 includes a computer-like font to visually indicate that the smartwatch 0304 informs the user 0302 of the second unread message 0315 using a default voice. Note also, the font of speech bubble 0318 is different from that of speech bubble 0314 of Figure 3A. This provides a visual indication that the personalized voice relating to the sender of the second unread message 0315 is different from the personalized voice relating to the sender of the first unread message 0308. The speech bubble 0314 also includes an image of the sending user, to further visually indicate that the content of the second unread message 0315 is read in a personalized voice. As should be understood, the speech bubbles discussed herein are provided for explanatory context and would not be displayed as separate user interface or other elements in the systems discussed herein. Rather, while the messages are being read back, the user would simply hear an appropriate voice but would not necessarily also receive a further visual element similar to the depicted speech bubbles. In some embodiments, a visual element can be displayed on a home screen or a connected device (such as a screen in a car) to depict that message content is being read back, and that visual element can be similar to or different than the speech bubbles discussed as illustrative examples herein.

Turning now to Figure 3C, in some embodiments, after the smartwatch 0304 reads the second unread message 0315, the smartwatch reads a third unread message 0320 to the user. This is indicated by the speech bubble 0324. Unlike the speech bubbles 0314 and 0318 of Figures 3A and 3B, the speech bubble 0324 includes a computer-like font to visually indicate that the smartwatch is reading the content of the third unread message 0320 using a default voice. The speech bubble 0324 further includes an image of a robot to provide another visual indication that the reading is performed using the default voice.

In some embodiments, there are multiple possible reasons for the content of the third unread message 0320 being read in a default voice, as opposed to a personalized voice associated with the sender of the third unread message 0320. For example, the sender of the third unread message 0320 may not have enabled the personalized voice synthesis feature for messages sent by him. In other words, the sender of the third unread message 0320 may not have authorized devices to read messages sent by him in a personalized voice associated with him. The sender of the third unread message 0320 may also have specifically prohibited certain users from accessing a user-specific synthesized voice associated with him, rather than prohibiting all users from accessing the user-specific synthesized voice. In some embodiments, users can have multiple associated voice models and can make certain ones available to certain users, while prohibiting those same certain users from accessing other voice models (e.g., a first voice model can be authorized for the user's spouse, significant other, or close friends, while a second voice model can be authorized the user's less-close acquaintances, such as work colleagues when a more professional sounding voice might be required).

As another example, the sender of the third unread message 0320 may not have enabled the personalized voice synthesis feature for the user 0302 (i.e., the receiving user). This may be because the sender of the third unread message 0320 is not comfortable with the user 0302 having messages from the sender of the third unread message 0320 read in a personalized voice associated with the sender of the third unread message 0320. As another example as to when the system might use a default voice rather than a user-specific synthesized voice, the sender of the third unread message 0320 may not yet have a personalized voice model synthesized and ready for use by the recipient of the message. For example, the sender of the third unread message 0320 may not yet have enough input data to allow for creation of a user-specific synthesized voice for the sender of the third unread message. In this case, the message may therefore be read in a default voice rather than a user-specific synthesized voice for the sender of the third unread message. Insufficient data, in this example, can refer to having too little data for certain phonemes or data that is of too low quality for certain phonemes,

As yet another example, the sender of the third unread message 0320 may have enabled the personalized voice synthesis feature for only a group of people that does not include the user 0302. For example, the sender of the third unread message 0320 may have enabled the personalized voice synthesis feature only for members of his immediate family (and, in this example, the user 0302 is not a member of the sender's immediate family). Or the sender of the third unread message 0320 may have enabled the personalized voice synthesis feature only for people in the sender's close-ties network (and the user 0302 is not in the sender's close-ties network).

As used herein, "close-ties network" describes a group (e.g., a network) of people for which a user has a minimum level of trust. A user's close-ties network(s) may include nodes that represent people and edges (e.g., connections between the nodes) that represent relationships between the people. In some embodiments, a close-ties network is used to determine whether a receiving user should be permitted to listen to a message sent by a sending user in a synthesized voice that represents the voice of the sending user. For example, if the receiving user is in the sending user's close-ties network and/or the strength of edge(s) between the receiving and sending users satisfies a minimum strength threshold (e.g., the receiving and sending users have been friends on Facebook for at least six months, the receiving and sending users have exchanged more than fifty SMS messages), then the receiving user may be allowed to listen to the message from the sending user in the sending user's voice (in other words, the receiving user is permitted to access a user-specific synthesized voice representing the voice of the sending user).

A close-ties network may be defined based on a characteristic associated with a contact (e.g., frequency of contact, length of contact, nature of contact, type of contact, etc.). For example, a user's close-ties network may be defined to include people that are in regular contact (e.g., a predetermined number of times per day, daily, a predetermined number of times per week, weekly, etc.) with the user. As another example, a user's close-ties network may be defined to include people that have been in contact with the user for a minimum amount of time (e.g., a month, a year, etc.). As yet another example, a user's close-ties network may be defined to include people that have contacted or been contacted by the user at least a certain number of times (e.g., ten times, fifteen times, etc.). As yet another example, a user's close-ties network may be defined to include people that have been in mutual contact with the user (e.g., exchanged text messages, phone calls, etc.).

A close-ties network may also be defined based on social networking. For example, a user's close-ties network may be defined to include people that are explicitly connected with the user (e.g., friends with the user, part of a user's contact list) on a social-media website (e.g., Facebook, WhatsApp). As another example, a user's close-ties network may be defined to include people that are implicitly connected with the user (e.g., people that follow the user and are also followed by the user) on a social-media website (e.g., Instagram).

A close-ties network may also be defined based on real-world relationships. For example, a user's close-ties network may be defined to include members of the user's family (e.g., siblings, parents, children, etc.). As another example, a user's close-ties network may be defined to include the user's co-workers (e.g., people that work at the same organization, in the same group, at the same office, etc.). As yet another example, a user's close-ties network may be defined to include people with which the user interacts on a regular basis (e.g., members of the user's gym, members of the user's volunteer organization, etc.).

A user's close-ties network may also be defined based on one or more of the aforementioned factors, as well as other factors not mentioned herein. For example, a close-ties network may be defined based on both social networking and frequency of contact. Further, the edges of the user's close-ties network may be weighted based on the various factors incorporated into the close-ties network. For example, for a close-ties network based on both social networking and real-world relationships, the strength of an edge between siblings that are friends on a social network site may be higher than the strength of an edge between non-family members that are friends on a social network site.

A user's close-ties network may be further defined based on the particular preferences (e.g., privacy preferences) of the user. For example, a user may indicate that the user would prefer that only a small amount of people have the option to play messages from the user in the user's synthesized voice. Accordingly, the user's close-ties network may be defined to include only members of the user's nuclear family and people with which the user contacts multiple times per day. As another example, another user may indicate that the other user would like a large number of people to have the option to play messages from the other user in the other user's synthesized voice. Accordingly, the other user's close-ties network may be defined to include the other user's nuclear and extended family, as well as all people with which the other user has explicit or implicit connections on a social-media website. Alternatively, the user's preferences may define the edge strength required for a receiving user to play a message from the user in the user's voice.

Relatedly, close-ties networks need not be symmetrical. Whether a first user is in a second user's close-ties network may not have any bearing on whether the second user is in the first user's close-ties network. For example, if a user's close-ties network is relatively small (e.g., restricted to family only, plus friends on social-media website for more than one year), the first user's close-ties network may not include an acquaintance of the user. But the close-ties network of the acquaintance may include the user if the acquaintance's close-ties network is relatively large (e.g., including people with which the acquaintance has sent or received more than fifteen text messages). Or the strength of an edge between the first user and the second user in the first user's close-ties network can be different from the strength of an edge between the first user and the second user in the second user's close-ties network. Furthermore, edge-strength can be unidirectional. For example, the strength of the edge from the first user to the second user in the first user's close-ties network can be different from the strength of the edge from the second user to the first user in the first user's close-ties network.

As discussed elsewhere, a user may indicate whether the user would prefer the user's device to play messages from other users in the other users' synthesized voices. The user's indication may likewise be based on a close-ties network of the user. For example, the user's device may only read messages in other users' synthesized voices if the other users are in the user's close-ties network (and assuming the other users have also granted the user access to the option to have messages from them read in their synthesized voices). As another example, the user's device may only read messages in other users' synthesized voices if the strength of the edge between the user and the respective other user satisfies a minimum strength threshold.

Finally, turning to Figure 3D, in some embodiments, after reading each of the unread messages 0308, 0315, and 0320, the smartwatch display 0306 indicates that there are no unread messages. Additionally, in some embodiments, the smartwatch 0304 provides audio that further indicates that there are no unread messages. This is illustrated by the speech bubble 0326, which states, "There are no more unread messages."

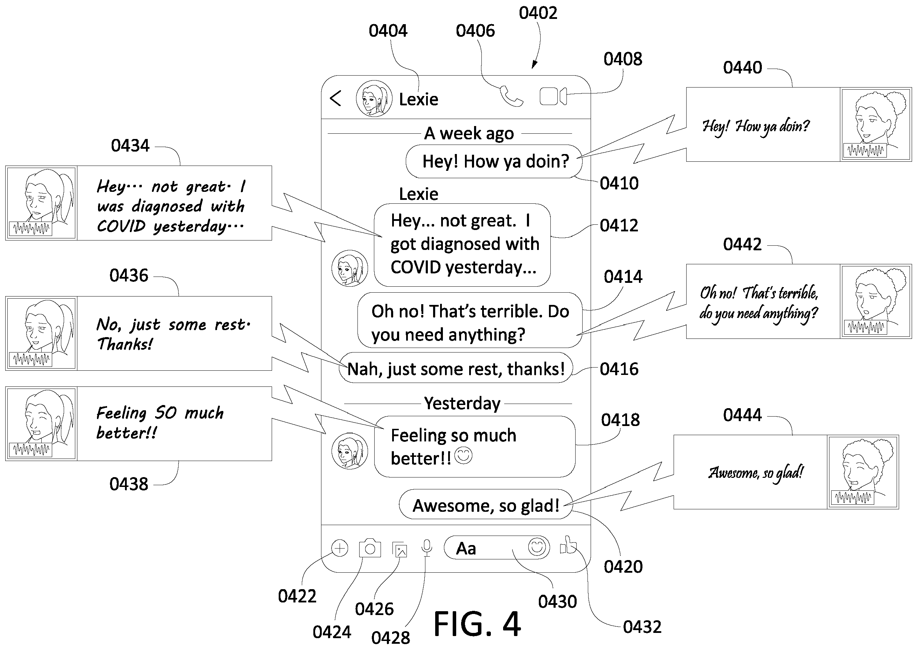

A user interface 0402 of a messaging application and includes schematic representations showing how messages can be read back using user-specific synthesized voices, in accordance with some embodiments. As illustrated in Figure 4, in some embodiments, the user interface 0402 includes the name of another user 0404. For example, in Figure 4, the user interface 0402 includes the name "Lexie," indicating that messages 0412, 0416, and 0418 of the user interface 0402 were sent by the other user 0404 named Lexie. Alternatively, in some embodiments, the name of the other user(s) 0404 may include multiple names (e.g., "Lexie, Rebekah, and Magnus"), or it may be the name of a group (e.g., Johnson family). In these embodiments, the name of the other user 0404 may be irrelevant to the name of any respective user whose messages are displayed in the user interface 0402.

In some embodiments, the user interface 0402 includes a phone call button 0406 and a videocall button 0408. In some embodiments, the user interface 0402 includes an attachment button 0422, a camera button 0424, a picture button 0426, or a microphone button 0428. The microphone button can allow a user of the device on which the user interface 0402 is displayed to record audio or send recorded audio. Of course, sending audio is different from sending a textual message to another device which then reads the textual message in a personalized voice associated with the sending user. Even though the end result might be similar, the latter allows the sending user the convenience of typing a message rather than speaking the message (e.g., if the sending user is in a quiet space) - while still allowing the receiving user the convenience of listening to the message receiving rather than reading it.

In some other embodiments, the microphone button 0428 allows the user to create a textual message via text-to-speech technology. For example, the user may speak a message which the device transcribes into text and then sends to the other user 0404. In some embodiments, the user may also create a textual message by typing into the text input bar 0430. In some embodiments, the text input bar 0430 includes an emoji button. In some embodiments, the text input bar is adjacent to a "like" button 0432. For example, the emoji button may allow the user to input emoji (e.g., a smiley face, a sad face, a laughing face, etc.). Further, the "like" button 0432 may allow the user to send a thumbs-up emoji. Alternatively, the "like" button 0432 may allow the user to "like" (i.e., indicate agreement with, approval of, etc.) a message displayed in the user interface (e.g., a message of the other user).

In some embodiments, the user interface 0402 includes messages. The messages can include messages received from a first sending user, such as messages 0412, 0416, and 0418. The messages can also include messages sent from a second sending user, such as messages 0410, 0414, and 0420. The messages can also include messages sent by a receiving user (not pictured). The messages may include text and emoji, but they may also include non-textual content (e.g., images, videos, GIFs, stickers, audio, etc.).

In some embodiments, the device reads messages received from the first sending user 0412, 0416, or 0418 using a personalized, synthesized voice associated with the first sending user. In some embodiments, the device reads messages received from the second sending user 0410, 0414, and 0420 using a personalized, synthesized voice associated with the second sending user. In some embodiments, the device varies the prosody (e.g., intonation, speed, rhythm, emotion, etc.) of the reading of the message based on the content of the message. For example, the content of message 0412 suggests that the first sending user 0404 was recently "diagnosed with COVID" and is feeling "not great." The speech bubble 0434 corresponding to the message 0412 includes an image of an exhausted, sad-looking first sending user. This indicates that the device varies its prosody while reading the message 0412 in order to convey emotion indicated by the content of the message 0412 (e.g., exhaustion, sadness, etc.). Similarly, the speech bubbles 0436 and 0438 include images of a less-exhausted, and well-recovered other user, respectively. This indicates that the device varies its prosody while reading corresponding messages 0416 and 0418 in order to convey the feeling suggested by the content of the messages 0416 and 0418. Likewise, the speech bubbles 0440, 0442, and 0444 include images that correspond to a respective prosody with which the device can read corresponding messages 0410, 0414, and 0420.

As illustrated, the message 0418 includes a smiley emoji. In some embodiments, the device recognizes an emotion suggested by the emoji and varies the prosody of its presentation of the message accordingly. In other embodiments, the device merely reads the emoji as if it were text. For example, while presenting the audio generated from the content of message 0418, the device might state: "Feeling so much better! Smiley face."

As noted above, messages of the user interface 0402 might include non-textual messages, as well as textual messages. In some embodiments, the device offers a description of the content of the non-textual message. In some embodiments, the description of the non-textual message is offered in a synthesized voice associated with the other user. For example, if the other user sends an image of a sunset to the user, the device might read: "I sent you a picture of a sunset. The sky is purple and red. It's beautiful." As another example, if the other user sends an embedded video or a link to an online video, the device might read a description of the online video.

Figure 5 illustrates an example communication network that can be used to facilitate access to voice models used to create various user-specific synthesized voices, in accordance with some embodiments. As illustrated in Figure 5, in some embodiments, a server 0512 is connected to multiple devices via a communication network 0510 (e.g., a wi-fi network, a Bluetooth network, etc.). The server can connect to a computer 0502 (e.g., a laptop, a desktop, etc.). The server can connect to a videoconference device 0504 (e.g., a Facebook Portal, etc.). The server can connect to a smartwatch 0506. And the server can connect to a smartphone 0508.

Figure 6 is a high-level architectural diagram 0602 that illustrates how input data can be provided to create a user-specific synthesized voice model 0606 that can then be used to produce voice clips 0608, in accordance with some embodiments. As illustrated in Figure 6, in some embodiments, inputs 0604 to the user-specific voice model 0606 include user audio (e.g., a recording of the user speaking) and user text (e.g., a text message typed by the user, a text message sent from the user's device, etc.). Further, outputs 0608 from the user-specific voice model 0606 include a voice clip (e.g., a reading of the user text in a synthesized voice that sounds like the user).

In some embodiments, the input 0604 to the voice model 0606 includes audio of a person speaking. The input 0604 can also include a transcript of the audio; alternatively, the voice model 0606 can create a transcript of the audio by analyzing it (e.g., using speech recognition). The input 0604 can also include a language identifier (e.g., identifying a language spoken in the audio); alternatively, the voice model 0606 can produce a language identifier by identifying a language associated with the audio. For example, if a language spoken by the person in the audio is English, then the input 0604 can include an identifier of the English language (e.g., a string that reads "English" or "ENG," a numeric identifier of the English language, etc.) The input 0604 can also include phoneme identifiers; alternatively, the voice model 0606 can produce phonemes identifiers based on the audio, the transcript, or the language identifier. For example, if the language spoken by the person in the audio is English, then the input 0604 can include identifiers of the phonemes of the English language (e.g., identifiers of the "b," "d," "f," etc. phonemes). In some embodiments, words spoken in a first language (e.g., English) can be used to produce phonemes for a different second language (e.g., Spanish), such that a user-specific voice model can be trained specifically using inputs only in the first language, but can then be utilized to produce spoken text based on phonemes generated for the different second language.

As used herein, "phoneme" refers to the smallest unit of speech that distinguishes one word from another. For example, the "n" sound is the smallest unit of speech that distinguishes the English word "ran" from the words "ram," and "rap." Accordingly, the "n" sound is a phoneme of the English language. In total, the English language includes more than forty phonemes (e.g., 42 or 44), such as the sounds of "b" and "d," as well as the different sounds "a" makes in the words "cat," "many," and "ball." Some languages have less phonemes (e.g., Spanish), and others have more (e.g., Lithuanian); however, each language has a finite number of phonemes.

After receiving the audio, the voice model 0606 uses the audio and the transcript to separate the audio into phonemes. The voice model may also use the language identifier or the phoneme identifiers in separating the audio into phonemes. The separated audio allows the voice model 0606 to learn how the person pronounces various phonemes. For example, the voice model 0606 can learn how the person pronounces the phonemes in particular contexts, such as when the person is speaking quickly, speaking regarding a particular topic, speaking at a particular volume, or speaking to a particular audience (e.g., the person's family, the person's co-workers, etc.). As another example, the voice model 0606 can learn how the person's facial expression corresponds to different pronunciations of the phonemes (e.g., the input 0604 includes video data that corresponds to the audio data).

In separating the audio, the voice model 0606 may determine that the audio does not include each phoneme associated with the language. For example, the audio may only include thirty-six of the more than approximately forty phonemes associated with the English language. In some embodiments, the voice model 0606 can generate estimated phonemes (e.g., audio that approximates how the person would pronounce the missing phonemes) based on the phonemes identified (e.g., a "nearest neighbor" phoneme) in the audio and/or pre-programmed information regarding the phonemes of the language. For example, the voice model 0606 can estimate how the user would pronounce the "b" sound phoneme based on how the user pronounces the "d" sound phoneme (the same is true for approximating phonemes from one language into phonemes for a different language).

In some embodiments, training the voice model 0606 includes generating, by the voice model 0606, audio based on the transcript of provided audio, and then comparing the generated audio to the provided audio. If the generated audio differs from the provided audio, training the voice model 0606 may further include adjusting weights associated with the pronunciation of each phoneme. In some embodiments, training the voice model 0606 includes generating audio based on a transcript of audio not provided as an input 0604 to the voice model 0606, and then comparing the generated audio against audio associated with the provided transcript. As above, weights associated with the pronunciation of each phoneme may be adjusted to further train and refine the voice model 0606.

In some embodiments, the voice model 0606 may transform inputs 0604 (e.g., raw inputs) into outputs 0608 such as a personalized audio voice clip that matches the voice of the person the model was trained on. In short, once the model has been sufficiently trained, it can be utilized to translate inputs 0604 into outputs 0608, such as a voice clip reading of the text in the user's voice.

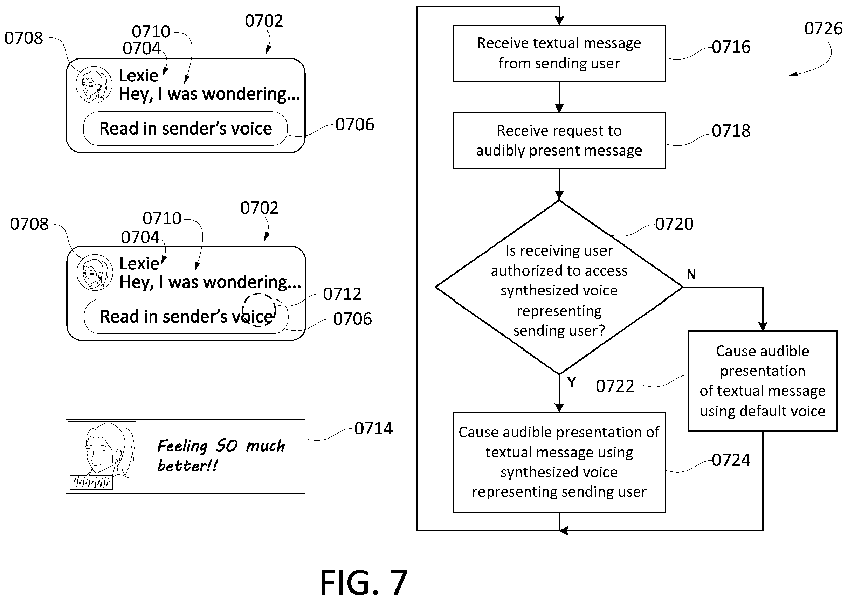

Figure 7 illustrates a method of using a user-specific synthesized voice to read back a textual message (on right) side-by-side with user interface elements (on left) that are caused to presented as an electronic device (e.g., wrist-wearable device) executes the depicted method, in accordance with some embodiments.

As illustrated in Figure 7, in some embodiments, a notification 0702 (e.g., a notification on a smartphone, a tablet, a smartwatch, etc.) indicates reception of a textual message (e.g., a text message, an instant message, an email, etc.). The notification 0702 can include an option 0706 (e.g., a button, a slider, an icon, etc.) to have the content (e.g., text, emoji, etc.) of the textual message presented in a synthesized voice associated with the sender. The notification 0702 can also include an image 0708 associated with the sender of the message (e.g., a picture of the sender, an avatar of the sender, an emoji of the sender, etc.). The notification 0702 can also include a name 0704 associated with the sender of the message (e.g., a name of the sender, a username of the sender, an alias of the sender, etc.). The notification 0702 can also include a representation 0710 of the content of the message (e.g., a portion of the content of the message, an entirety of the content of the message, etc.).

As indicated by the touch indicator 0712 of Figure 7, in some embodiments, the user can select the option 0706 to have the content of the textual message presented in a synthesized voice associated with the sender by touching the option 0706. In some embodiments, the user can select the option 0706 by clicking the option 0706 (e.g., with a mouse), tapping on the option (e.g., with a stylus), or requesting the option 0706 (e.g., with a voice command). After the user selects the option 0706, in some embodiments, the content of the textual message is presented to the user in the synthesized voice associated with the sender of the message. This is represented by the audible presentation 0714 of Figure 7.

As noted above, Figure 7 also illustrates a flow diagram of a method 0726 of selectively using a user-specific synthesized voice to audibly present a textual message, according to some embodiments. Operations of the method 0726 can be performed by one or more processors of an electronic device (e.g., computer 0502, videoconference device 0504, smartwatch 0506, or smartphone 0508, or server 0512 of Figure 5; or a head-worn virtual reality device; etc.). At least some of the operations shown in Figure 7 correspond to instructions stored in a computer memory or computer-readable storage medium. Operations of the method 0726 can be performed alone by a single device. Alternatively, operations of the method 0726 can be performed together in conjunction with one or more processors or hardware components of another device (e.g., computer 0502, videoconference device 0504, smartwatch 0506, or smartphone 0508, or server 0512 of Figure 5; or a head-worn virtual reality device; etc.) communicatively coupled to the device (e.g., via communication network 0510 of Figure 5), or instructions stored in memory or computer-readable medium of the other device communicatively coupled to the device.

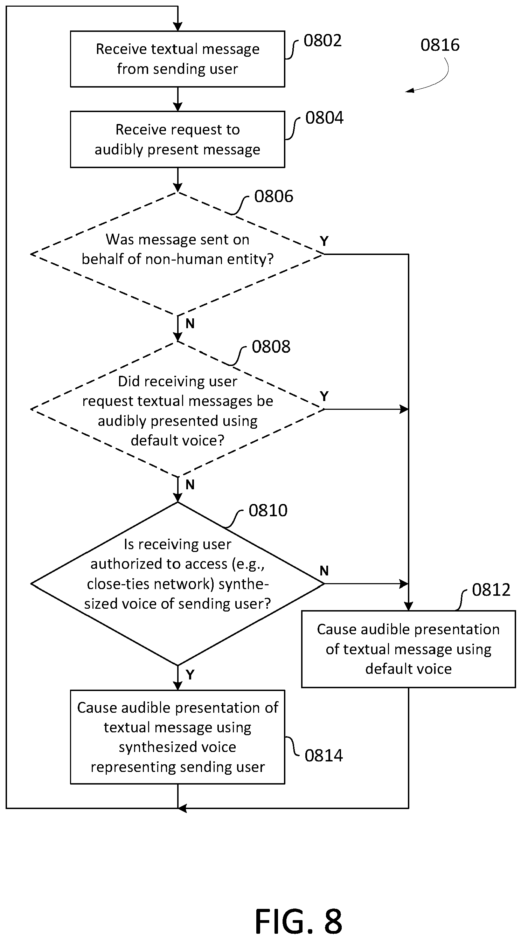

The method 0726 of Figure 7 includes receiving (0716) a textual message from a sending user. The method 0726 also includes receiving (0718) a request to audibly present the textual message. The method 0726 also includes determining (0720) whether a receiving user is authorized to access a synthesized voice representing the sending user. The method 0726 also includes causing (0722), in accordance with a determination that the receiving user is not authorized to access the synthesized voice, an audible presentation of the textual message using a default voice. The method 0726 also includes causing (0724), in accordance with a determination that the receiving user is authorized to access the synthesized voice, an audible presentation of textual message using a synthesized voice representing the sending user. The steps of method 0726 are discussed in greater detail below, with respect to Figure 8 and the corresponding steps therein.

Figure 8 is a detailed flow diagram of a method 0816 of selectively using a user-specific synthesized voice to audibly present a textual message, according to some embodiments. As with method 0726 of Figure 7, operations of the method 0816 can be performed by one or more processors of an electronic device (e.g., computer 0502, videoconference device 0504, smartwatch 0506, smartphone 0508, or server 0512 of Figure 5; or a head-worn virtual reality device; etc.). At least some of the operations shown in Figure 8 correspond to instructions stored in a computer memory or computer-readable storage medium. Operations of the method 0816 can be performed alone by a single device. Alternatively, operations of the method 0816 can be performed together in conjunction with one or more processors or hardware components of another device (e.g., computer 0502, videoconference device 0504, smartwatch 0506, or smartphone 0508, or server 0512 of Figure 5; or a head-worn virtual reality device; etc.) communicatively coupled to the device (e.g., via communication network 0510 of Figure 5), or instructions stored in memory or computer-readable medium of the other device communicatively coupled to the device.

In some embodiments, the method 0816 includes receiving (0802) at a receiving electronic device associated with a receiving user, a first textual message sent by a first sending user of a first sending electronic device. An example of this is shown in Figure 4, which shows received messages 0412, 0416, and 0418 being displayed by user interface 0402. Similarly, Figure 7 shows a notification 0702 of a received message that includes a user interface element 0706 that allows for indicating that the message should be read back to the receiving user in an audible form.

The textual message can be a message input by a user of a sending electronic device using a keyboard (e.g., a virtual keyboard, a physical keyboard, an on-screen keyboard, etc.). The textual message can also be a message input by a user of a sending electronic device using speech-to-text input. The textual message can include both text and emoji. The textual message can also include a reaction (e.g., "liking" a message, "hearting" a message, etc.). The textual message can be an instant message (e.g., a message exchanged over a social-media platform, etc.), a text message (e.g., an SMS, an MMS, etc.), or an email.

In some embodiments, the method 0816 includes, after receiving (0804) a request to have the first textual message audibly presented via the receiving electronic device: causing (0814), by the receiving electronic device, an audible presentation of the first textual message using a user-specific synthesized voice representing the first sending user in accordance with a determination (0810) that the receiving user is authorized (0810-Y) to access the user-specific synthesized voice representing the first sending user.

The aforementioned received request can be from the receiving user. For example, the request can include the receiving user pressing a button on the receiving device, speaking a command to the receiving device, or pressing a button or speaking a command to a device connected to the receiving device (e.g., a smart speaker, wireless headphones, a car, etc.). Alternatively, the request can also be generated automatically by the receiving electronic device, or a device coupled to the receiving electronic device on behalf of the receiving user based on a determination that audible presentation criteria are satisfied. For example, if the receiving device receives a textual message while the user is currently driving, the receiving device may automatically generate a request to audibly present the textual message.

The aforementioned causing operation (0814) can include the receiving electronic device using its own speakers for the audible presentation. The causing operation can also include providing data to an associated speaker(s) (e.g., headphones, car speakers, Bluetooth speakers, etc.) that then presents the audible presentation of the textual message. The causing operation can also include varying the prosody of the audible presentation based on the content of the textual message.

The user-specific synthesized voice representing the sending user can be a synthesized voice approximating the voice of the sending user. The user-specific synthesized voice representing the sending user can be a synthesized voice similar to the voice of the sending user. The user-specific synthesized voice representing the sending user can be a synthesized voice that sounds like the voice of the sending user. Alternatively, the user-specific synthesized voice representing the first sending user can be a synthesized voice chosen or created by the first sending user (e.g., a voice chosen by the sending user to sound like a voice of their preferred gender identity).

The user-specific synthesized voice representing the sending user can be received with the textual message. The user-specific synthesized voice can be received separately from the textual message (e.g., downloaded from a server). Alternatively, the user-specific synthesized voice can be synthesized on the receiving device, using a voice model associated with the sending user (e.g., for devices with higher processing power). The voice model can be encrypted on the receiving device, such that it is inaccessible to the receiving user. The determination that the receiving user is authorized to access the user-specific synthesized voice representing the first sending user can include authentication (e.g., a password, a biometric scan, etc.). The determination that the receiving user is authorized to access the user-specific synthesized voice representing the first sending user can include the first sending user allowing any receiving user to access the user-specific synthesized voice representing the first sending user. "Accessing" the user-specific synthesized voice can include listening to a rendering of the text of the textual message in the user-specific synthesized voice.

In some embodiments, the method 0816 includes, after receiving (0804) a request to have the first textual message audibly presented via the receiving electronic device: causing (0814), by the receiving electronic device, an audible presentation of the first electronic device using a default voice in accordance with a determination (0810) that the receiving user is not authorized (0810-N) to access the user-specific synthesized voice representing the first sending user. The causing an audible presentation of the textual message using a default voice can also occur in accordance with a determination (0808) that the receiving user prefers presentation of textual messages (e.g., sent by the second sending user) using the default voice (0808-Y). The default voice may be one of many default voices, where each of the default voices corresponds to a different language, gender, accent, tonality, and so on (e.g., an American female voice, a Spanish male voice, a British male voice, etc.). The causing an audible presentation using a default voice can also occur in accordance with a determination (0806) that the first received message was sent (0806-Y) on behalf of a non-human entity.

The technique described above helps to ensure the models used to generate the user-specific synthesized voices are only utilized at appropriate points in time and based on specific authorization to do so. Because running voice synthesis models can be computationally expensive (which can also drain power resources), ensuring that these models are only used at appropriate points in time can be critical to helping to make efficient use of limited computing and power resources of an electronic device. These techniques also promote users feeling personally closer (and expressing more sympathy) to the sender of the textual message, both because the message is read in their voice and also because the message may reflect the emotion of the content of the message (e.g., read in a sad voice for a sad message). This promotes a sustained user interaction between the receiving user and the receiving electronic device. When messages are read by default voice, receiving user might opt for not using audible presentation. However, when the audible presentation is personalized, the receiving user is perhaps more likely to use the audible presentation features as compared to devices that only offer an audible presentation in a default voice, thereby promoting a sustained user interaction with the audible presentation features on the receiving electronic device.

In some embodiments, receiving the first textual message further includes receiving an indication from the first sending electronic device that the receiving user is authorized to access the user-specific synthesized voice representing the first sending user. The first textual message can include metadata indicating that the receiving user is authorized to access the user-specific synthesized voice representing the first sending user. The indication can be sent directly from the first sending electronic device to the receiving device, or it can be sent indirectly. For example, the first sending electronic device can send the indication to another electronic device (e.g., the server 0512 of Figure 5), which device then sends the indication to the receiving electronic device.

The receiving user being authorized to access the user-specific synthesized voice representing the first sending user can be based on the receiving user being in a close-ties network of the first sending user. As an example, whether the sending user and the receiving user are a part of a close-ties network may be based on the number of friends they share in a social network (e.g., ten, fifteen, or fifty mutual Facebook friends), the amount of time the users have been connected (e.g., "friends") via a social network, the number of interactions (e.g., messages sent) between the users via the social network, or any combination of the preceding factors.

In some embodiments, the request to have the first textual message audibly presented via the receiving electronic device includes a request to have the first textual message audibly presented using the user-specific synthesized voice representing the first sending user. The request to have the first text message audibly presented using a user-specific synthesized voice representing the first sending user can include a one-time request. For example, the user can select a setting (e.g., "Personalize My Messages") indicating that the user wants each textual message received from the first sending user to be presented using a user-specific voice representing the first sending user. Alternatively, the request can be something generated each time the user receives a textual message from the first sending user and indicates they want the textual message to be presented using the user-specific voice. Or the request can be something generated in response to a regular query of the user. For example, the electronic device can prompt the user periodically (e.g., once per week, month, etc.) or in response to receiving a predetermined number of messages from the first sending user (e.g., once per every ten messages, one hundred messages, etc.).

In some embodiments, causing the audible presentation of the first textual message using the user-specific synthesized voice includes: identifying an explicit characteristic (e.g., a statement that the author of the textual message is feeling sick) of the first textual message; and varying a prosody of the audible presentation based on the explicit characteristic of the first textual message. For example, message 0412 of Figure 4 explicitly states that the sending user is sick and not feeling well. Accordingly, message 0412 may be presented such that the prosody of the presentation conveys exhaustion, discomfort, or sadness. As another example, the content of message 0438 of Figure 4 explicitly indicates that the sending user is no longer sick and feeling better. Accordingly, message 0438 may be presented such that the prosody of the presentation conveys relief or happiness. Varying the prosody of the audible presentation of the first textual message can include varying the speed, intonation, pitch, etc. at which certain words or syllables of the message are presented.

In some embodiments, causing the audible presentation of the first textual message using the user-specific synthesized voice includes: identifying an implied characteristic (e.g., an implication that the author of the textual message is angry based on the message being written in uppercase letters) of the first textual message; and varying a prosody of the audible presentation based on the implied characteristic of the first textual message. The implied characteristic of the first textual message can be based on capitalization (e.g., "I'm sorry," "IM SORRY," "im sorry," etc.) of the first textual message. The implied characteristic of the first textual message can also be based on non-textual content of the first textual message, such as emoji (e.g., a heart emoji, a crossed-out eyes emoji, etc.) or images (e.g., a picture, a GIF, etc.). The implied characteristic of the first textual message can also be based on the send or receipt time of the first textual message. For example, if the first textual message was sent shortly after (e.g., seconds after) another textual message, presenting the first textual message may include reading the first textual message as if it were combined with the other textual message.

In some embodiments, causing the audible presentation of the first textual message using the user-specific synthesized voice includes: identifying a characteristic of an additional textual message in a conversation that includes the first textual message; and varying a prosody of the audible presentation based on the characteristic (e.g., an explicit characteristic, an implied characteristic) of the additional textual message. The characteristic of the additional textual message can include any of the characteristics discussed above with respect to the first textual message.

In some embodiments, the location at which the voice model is stored is determined based on computational restraints, bandwidth constraints, or security interests for different devices that might be selected to perform voice-synthesis operations (e.g., creation of voice models, use of voice models, etc.). Regarding computational restraints, synthesizing the synthesized voice using the voice model may require a minimum computational capability (e.g., processor speed, amount of memory necessary to perform the voice synthesis operation). Accordingly, the device at which the voice model is stored (e.g., the sending device, the receiving device, or an intermediate server) may need to meet minimum computational capacity requirement(s) to be selected as the device to perform the voice synthesis operation. Furthermore, the device with the greatest computational capacity is likely to be able to synthesize the synthesized voice fastest, which might incentivize storing the voice model at that same device.

Regarding bandwidth, sending the voice model is likely to require less bandwidth than sending the synthesized voice. For example, if the voice model is stored at the sending device, then each time the sending device sends a textual message to the receiving device, the sending device may need to also send a corresponding synthesized voice to the receiving device. However, if the voice model is stored at the receiving device, then the sending device would not need to send a synthesized voice with each textual message. Rather, the sending device would only need to send the voice model to the receiving device (or might not need to send the voice model at all if it has already been sent to the receiving device previously; in some embodiments, a voice-model-sending check is performed to determine whether the voice model needs to be sent in full or in part (such as when the voice model has been partially updated)). The receiving device would then be able to synthesize a synthesized voice for each textual message received from the sending user of the sending device. This may significantly reduce bandwidth concerns for both the sending and receiving devices. Accordingly, bandwidth constraints may, in some embodiments, incentivize storing the voice model downstream of the sending device (e.g., at the receiving device or an intermediate server).

Regarding security, storing the voice model at a location other than the sending device may raise security concerns. The sending user, for instance, may not want the receiving user to have access to the voice model, as access to the voice model may allow the receiving user to synthesize audio based on text not authored by the sending user. Accordingly, security concerns may incentivize storing the voice model at a location other than the receiving device (e.g., at the sending device or an intermediate server).

The determination of where to store the voice model can be performed on a device-by-device or a user-by-user basis. For example, as discussed elsewhere with respect to close-ties networks, certain metrics may suggest a high degree of trust between the sending and receiving users. Where trust between the sending and receiving users is especially high, security concerns may not be as much of an issue and the voice model may be stored, for example, at the receiving user's device. As another example, a user may be presented with the option to prioritize speed, bandwidth, or security, and the decision regarding where to store the voice model may be made based on the user's selection(s). As yet another example, the determination regarding where to store the voice model may require balancing the three aforementioned factors in light of things known about the users and devices (e.g., the receiving device is a shared device, the sending user prioritizes security above all else, the receiving user has high download speeds).

In some embodiments, the determination that the receiving user is authorized to access the user-specific synthesized voice representing the first sending user includes authenticating an identity of the receiving user. The determination that the receiving user is authorized to access the user-specific synthesized voice can include using voice- or facial-recognition technology to identify the identity of the user. The determination can also include requiring the user to verify their identity, such as by entering a password or completing a biometric (e.g., fingerprint, iris, etc.) scan. The determination can also include determining whether the first sending user has consented to access by the receiving user of the user-specific synthesized voice associated with the sending user.

In some embodiments, the determination that the receiving user is authorized to access the user-specific synthesized voice representing the first sending user is based on a strength of a relationship between the receiving user and the first sending user. The strength of the relationship can be determined by analyzing a close-ties network for the first sending user and which also includes the receiving user, such that a number of edges or nodes between these respective users in the close-ties network can be used to assess the strength of the relationship (e.g., less than 5 edges connecting the respective users can qualify as a strong relationship, whereas more than 5 edges between users can show a weak relationship).

In some embodiments, the determination that the receiving user is authorized to access the user-specific synthesized voice representing the first sending user includes determining that the first sending user has granted the receiving user permission to access the user-specific synthesized voice. Determining that the first sending user has granted the receiving user permission to access the user-specific synthesized voice representing the first user can include determining that the first sending user has specifically authorized the receiving user to access the user-specific synthesized voice. Alternatively, determining that the first sending user has granted the receiving user permission to access the user-specific synthesized voice can include determining that the first user has generally authorized all persons within a certain category (e.g., all persons; all saved contacts on a phone of the first sending user; all Facebook, Instagram, WhatsApp, etc. friends of the first sending user; etc.).

In some embodiments, causing the audible presentation of the second textual message using the default voice includes foregoing determining whether the receiving user is authorized to access a user-specific synthesized voice representing the second sending user. If the second sending user is a non-human entity, it can be assumed there exists no voice model corresponding to the voice of the second sending user's voice (because non-human entities do not have voices). This assumption can decrease processing time required to perform the method of claim 1. Additionally, the receiving user can also indicate they do not want the receiving electronic device to audibly present the first textual message using a user-specific synthesized voice representing the first sending user, in which case determining whether the receiving user is authorized to access the user-specific synthesized voice is unnecessary.

In some embodiments, the second textual message comprises a textual message sent on behalf of a non-human entity. In other words, the second sending user is associated with a non-human entity. The textual message sent on behalf of a non-human entity can include a textual message sent on behalf of a company advertising its services; a textual message sent on behalf of an office (e.g., a doctor office, a dental office, a legal office, etc.) reminding a client (e.g., a patient, a potential customer, etc.) of an appointment. In some embodiments, the receiving user has requested to have textual messages audibly presented using the default voice.

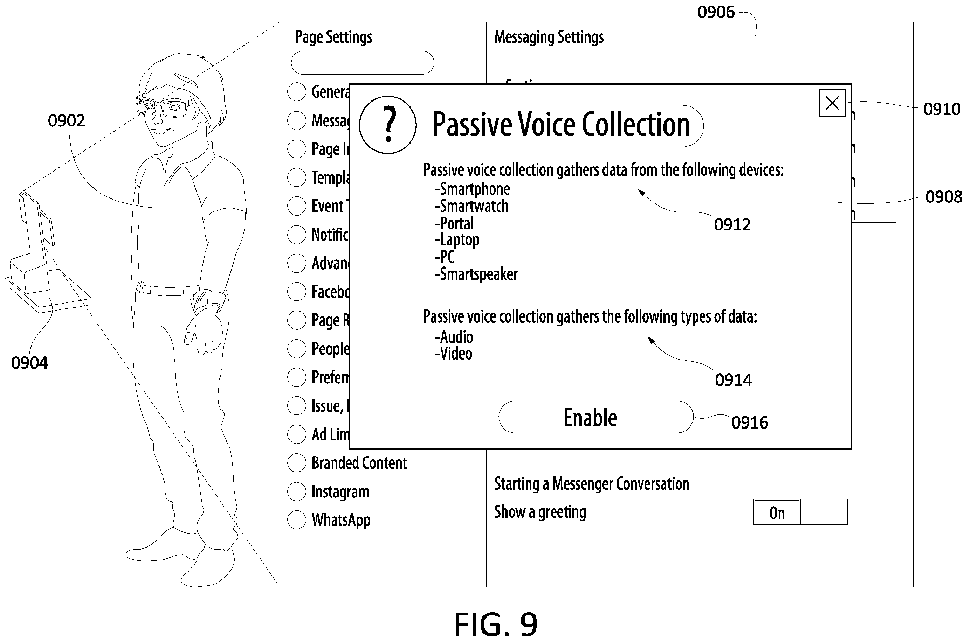

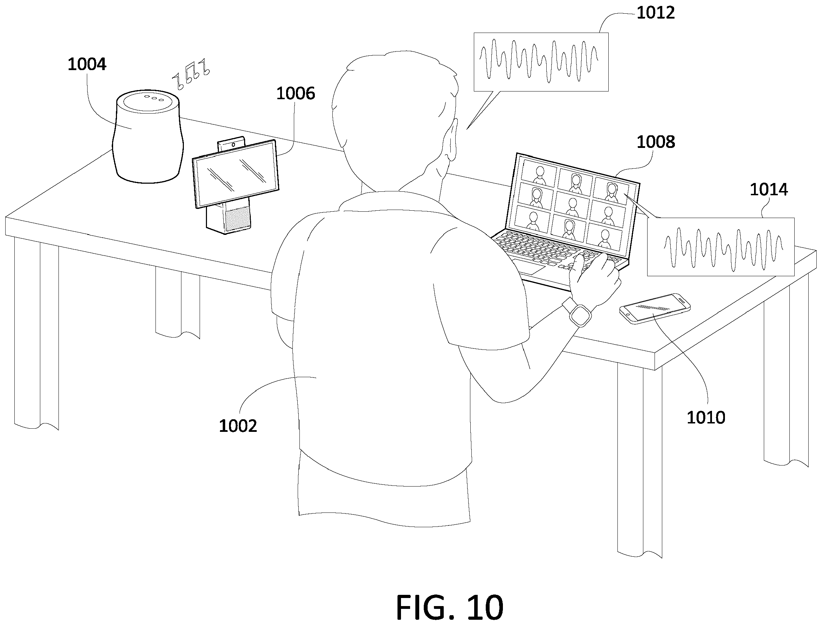

Figure 9 illustrates an example information overlay 0908 that can be presented to provide information to users concerning passive voice collection, in accordance with some embodiments. As discussed below with respect to Figures 10-12, passive voice collection may include collecting audio data (e.g., audio data that includes someone speaking) for purposes of providing the audio data to a machine-learning model. The machine-learning model may be configured to receive a textual input and produce output audio that sounds like a rendition of the textual input in a user's voice (e.g., audio that sounds as if the user were reading the textual input). Additionally, the machine-learning model may be configured to receive an audio input (e.g., that includes a user speaking) and produce output text that transcribes the audio input (e.g., transcribing the portion of the audio input that includes the user speaking). Further, the machine-learning model may be configured to combine an audio or textual input (e.g., that corresponds to something spoken or written by a user) with an additional audio input (e.g., a mechanical sound, like the cranking of a machine or the hum of a car's engine) and produce an audio output that conveys the user's language from the first input with the sounds from the additional audio input. Moreover, the machine-learning model may be configured to modulate a voice of a user (e.g., to make the user sound more masculine, feminine, etc.).

Like Figure 1B, Figure 9 also illustrates a user 0902, a videoconference device 0904, and a settings screen 0906. As with the information overlay 0112 of Figure 1B, the information overlay 0908 of Figure 9 may be displayed in response to the user 0902 selecting a link (e.g., a link on the settings screen 0906) or an option to enable a passive voice collection feature. For example, if the user 0902 has never enabled the passive voice collection feature before, the device 0904 can display the information overlay 0908 in order to notify the user 0902 what the passive voice collection feature entails. Similarly, if the user 0902 has not enabled the passive voice collection feature for a long time (e.g., six weeks, two months, one year, etc.), the device 0904 can display the information overlay 0908 in order to remind the user 0902 what the passive voice collection feature entails. Alternatively, the device 0904 can display the information overlay 0112 each time the user selects the option 0110 to enable the passive voice collection.

As illustrated in Figure 9, the information overlay 0908 can include a notice 0912 of the various devices (e.g., a smartphone, a smartwatch, a tablet, a computer, an audiovisual system of a vehicle, an artificial-reality device (which can include an augmented-reality device such as a pair of smart glasses, a virtual-reality device such as a virtual-reality headset), etc.) from which data is collected in order to enable the passive voice collection feature. Additionally, the information overlay 0908 can also include a notice 0914 of the various types of data (e.g., audio data, video data, etc.) collected in order to enable the passive voice collection feature. Further, the information overlay 0908 can include a description of the passive voice collection feature.

The information overlay 0908 can also include an option 0916 to enable the passive voice collection feature (e.g., a slider bar, a button, etc.). In some embodiments, the option 0916 of the information overlay 0908 is a singular option (e.g., an "Enable button). In other embodiments, the option 0916 includes more fine-tuned controls for the user 0902 to selectively enable certain aspects of the passive voice collection feature. For example, the option 0118 can allow the user 0902 to enable data collection for some of the user's devices (e.g., smart speakers) but not others (e.g., smartphone, laptop, etc.). As another example, the option 0118 can allow the user 0902 to enable data collection for certain times of day (e.g., morning, afternoon) and disable data collection for other times of day (e.g., evening). As yet another example, the option 0118 can allow the user 0902 to enable only certain types of data collection (e.g., audio data).

Finally, the information overlay can include an option 0910 to close the overlay (e.g., an "X" button). In some embodiments, when the user 0902 closes the information overlay 0112 (e.g., by selecting the option 0910 to close the overlay), the videoconference device 0904 then displays a settings screen, such as the settings screen 0106 illustrated in Figure 1A.

Figure 10 illustrates a user 1002 conducting a video call via a computer 1008, in accordance with some embodiments. As illustrated, in some embodiments, a user 1002 is using a computer 1008 to conduct a video call. This is indicated by the user interface displayed on the screen of the computer 1008. This is also indicated by the speech bubbles 1012 and 1014, which represent the audible speech of the user and another user participating in the video call, respectively.

The figure also includes a smart speaker 1004, a teleconference device 1006 (e.g., a Facebook Portal), and a smartphone 1010. Assuming the user has opted-in to a passive voice collection feature, the smart speaker 1004, the teleconference device 1006, and the smartphone 1010 may collect audio or video data of the user. For example, the smart speaker 1004 and the smart phone 1010 may collect audio data of the user. As another example, the teleconference device 1006 and the computer 1008 may collect audio and video data of the user.

Other devices capable of collecting audio and/or video data include virtual- and artificial-reality devices (e.g., an Oculus headset), audiovisual vehicle interfaces (e.g., a microphone of a car's infotainment system that also includes one or more associated displays in the car). A device does not need to be able to collect both audio and video data in order to collect data for training the machine-learning model. For example, inputs to the machine-learning model can include audio collected by a first electronic device and video data collected by a second electronic device that is different from the first electronic device. Any device capable of collecting audio or video data can be used for data-collection purposes (and users and provided with an ability to opt-in each specific device to participate in the process of collecting audio and/or video data).

In some embodiments, selecting inputs to the machine-learning model includes selecting data (e.g., an audio recording, a video recording) from a plurality of data sources (e.g., recordings from multiple electronic devices) based on attributes of individual datum. For example, the audio data with a highest fidelity can be selected as an input to the machine-learning model. As another example, the video data with the best image of a user's face can be selected as an input to the machine-learning model. As yet another example, the video data with the best lighting can be selected as an input to the machine-learning model. In some embodiments, multiple audio recordings or multiple video recordings are provided to the machine-learning model as inputs.

In some embodiments, collected audio and video data of the user is sent to an electronic device to be presented as training data to a machine-learning model, which, after training, then produces an output like the user-specific voice model 0606 of Figure 6. In some embodiments, the data, before or in conjunction with training, is filtered to exclude all data including audio or video of users other than the user 1002.

In some embodiments, the voice model 0606 can be trained using neural networks. Furthermore, in some embodiments, the voice model 0606 can be trained using deep learning. Additionally, in some embodiments, the voice model 0606 can be trained using reinforcement learning. In some embodiments, the voice model 0606 can be trained using supervised learning, unsupervised learning, or self-supervised learning, or any combination of these three example types of learning. Self-supervised learning in particular is advantageous in training models to accurately predict missing portions of input data, which can be useful in modeling personalized voice synthesis. Finally, in some embodiments, the voice model 0606 can be trained using an ensemble of multiple learning algorithms including but not limited to the learning algorithms listed above.

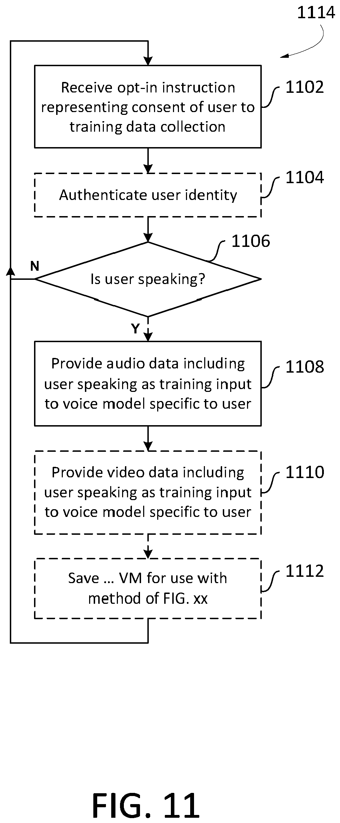

Figure 10 offers an example of the convenience of the method 1114 discussed with respect to Figure 11. Rather than the user needing to sit in front of a computer and speak in order to generate training data, the user can simply use his devices as per usual (e.g., conducting a video call, as depicted in Figure 11 and discussed briefly above).

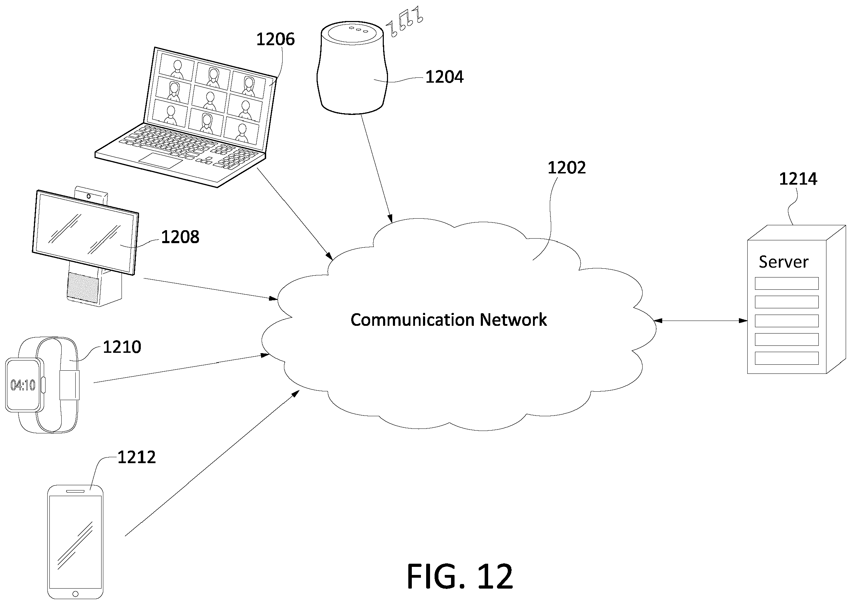

Figure 11 is a detailed flow diagram of a method of passively collecting training data used to create a voice model that is specific to a user, in accordance with some embodiments. As with method 0726 of Figure 7, operations of the method 1114 can be performed by one or more processors of an electronic device (e.g., smart speaker 1204, computer 1206, videoconference device 1208, smartwatch 1210, smartphone 1212, or server 1214 of Figure 12; or a head-worn virtual reality device; etc.). At least some of the operations shown in Figure 11 correspond to instructions stored in a computer memory or computer-readable storage medium. Operations of the method 1114 can be performed alone by a single device. Alternatively, operations of the method 1114 can be performed together in conjunction with one or more processors or hardware components of another device (e.g., smart speaker 1204, computer 1206, videoconference device 1208, smartwatch 1210, smartphone 1212, or server 1214 of Figure 12; or a head-worn virtual reality device; etc.) communicatively coupled to the device (e.g., via communication network 1202 of Figure 12), or instructions stored in memory or computer-readable medium of the other device communicatively coupled to the device.

In some embodiments, the method 1114 includes receiving (1102) an opt-in instruction, wherein the opt-in instruction represents a user consenting to collection of training data associated with the user via one or more electronic devices. The opt-in instruction can be optional. The opt-in instruction can include the user responding to a prompt on the one or more electronic devices. For example, the opt-in instruction can include the user selecting the enable button 0916 of Figure 9. The opt-in can also include the user responding to a prompt on another device separate from the one or more electronic devices. The training data can include audio data such as audio recording of the user speaking. The training data can also include video data such video as recording of the user speaking. The one or more electronic devices can include a cell phone, a computer, or a videoconference device (e.g., smart speaker 1204, computer 1206, videoconference device 1208, smartwatch 1210, or smartphone 1212 of Figure 12). The one or more electronic devices can include a microphone or a camera. The opt-in instruction can include an opt-in agreement, an acceptance, or an acknowledgement.

The user's consent can also be a specific consent to background or passive collection of training data without a specific request from the user each time that some hardware component (mic or camera) of the one or more electronic devices are used to collect video and/or audio data that are then used as the training data.

In some embodiments, the method 1114 also includes, after receiving (1102) the opt-in instruction: in accordance with a determination (1106) that the user is speaking (1106-Y) based on data collected by the one or more electronic devices, providing (1108) audio data that includes the user speaking as a training input to a voice model specific to the user. The determination that the user is speaking can include using voice- or facial-recognition technology to identify the identity of the user (e.g., using voice- or facial-recognition technology to process audio or video data, respectively, captured the one or more electronic devices). The determination can also include requiring the user to verify their identity, such as by entering a password or completing a biometric (e.g., fingerprint) scan. Alternatively, the method 1114 may include authenticating (1104) the identity of the user prior to determining (1106) whether the user is speaking.

This invention will make the collection of training data (e.g., voice data or video data) much less involved. Currently, collecting training data for creation of a voice model involves requiring a user to speak into a microphone (or a camera) for extended periods of time. However, with the passive data collection method of the claim, data collection can occur while the user is doing things they already do every day, such as performing video calls.

In some embodiments, receiving (1102) the opt-in instruction from the user includes presenting the user with an option to opt-in to the collection of training data or determining the user already opted-in to the collection of training data. Repeatedly requiring the user to opt-in to the collection of training data can be irritating to the user. Accordingly, rather than requiring the user to repeatedly opt-in to the collection of training data, the method can include presenting the user with an option to opt-in to the collection of training data until the user revokes the "opt-in." Then, receiving (1102) the opt-in instruction from the user can include determining the user already opted-in to the collection of training data (i.e., without requiring the user to again opt-in to the collection of training data).

In some embodiments, the data collected by the one or more electronic devices includes video data. In some embodiments, the video data is captured using a camera of the one or more electronic devices. The camera can be external to the one or more electronic devices, such as a webcam. The camera can also be wired to, or wirelessly connected to (e.g., via WiFi), the one or more electronic devices. The camera can also be internal to the one or more electronic devices, such as the camera of a smartphone, a laptop computer, or a videoconference device (e.g., a Facebook Portal).

In some embodiments, the data collected by the one or more electronic devices includes audio data. The audio data can be captured using a microphone of the one or more electronic devices. The microphone can be external to the one or more electronic devices. The microphone can also be wired to, or wirelessly connected to (e.g., via Bluetooth) the one or more electronic devices. The microphone can also be internal to the one or more electronic devices, such as the microphone of a smartphone, a laptop computer, or a video-calling device (e.g., a Facebook Portal).

In some embodiments, the data collected by the one or more electronic devices is processed to allow for detecting a characteristic of the user while the user was speaking. The characteristic of the user can be a prosodic characteristic associated with the user (e.g., the user's tone of voice, volume, etc.). The characteristic of the user can also be a facial expression of the user (e.g., a furrowed brow, a smiling mouth, etc.).

In some embodiments, the characteristic of the user includes a prosodic characteristic associated with the user while the user is speaking. In some embodiments, the prosodic characteristic is provided as an additional training input to the voice model specific to the user. The voice model can be one or more voice models, with each of the respective voice models being trained to reflect a particular prosodic characteristic (or a collection of prosodic characteristics).

In some embodiments, the characteristic of the user includes a facial expression associated with the user while the user is speaking. In some embodiments, the method 1114 further includes providing the facial expression of the user as an additional training input to the voice model specific to the user. The voice model can be one or more voice models, with each of the respective voice models being trained to reflect a particular prosodic characteristics (or a collection of prosodic characteristics).

In some embodiments, the determination (1106) that the user is speaking includes at least one of: (a) comparing the audio data against pre-authenticated audio data associated with the identity of the user; and (b) comparing the video data against pre-authenticated video data associated with the identity of the user. Some embodiments can also (or alternatively) authenticate an identity of the user via a biometric scan.

The use of audio data and/or video data to know which user is speaking and when can also be performed using different devices. For instance, a first electronic device can be better positioned to capture video data that can be used to assist in a determination that the user's mouth is moving, and a different electronic device can be in a better position to capture audio data while the user is known to be speaking. In this way, multiple devices can be used together to assist with the passive (and user-authorized) collection of video and audio data that is discussed herein. In certain instances, the electronic devices can also use the authentication data to figure out which device to use for collection of which type of data (e.g., as a user moves within a room different devices can be used for audio and/or video data collection depending on which device is receiving the data at a highest fidelity level or using some other metric to make this assessment).

In some embodiments, the method 1114 further includes, after receiving (1102) the opt-in instruction, in accordance with the determination (1106) that the user is speaking (1106-Y) based on the data collected by the one or more electronic devices, providing video data that includes the user speaking as a training input to the voice model specific to the user.

In some embodiments, providing the audio data includes collecting first audio data from a first electronic device of the one or more electronic devices and collecting second audio data from a second electronic device of the one or more electronic devices. In some embodiments, providing the audio data also includes providing the first audio data and the second audio data as at least one respective training input for the voice model specific to the user. The first and second audio data can be combined as one training input. Alternatively, the first and second audio data can be provided as two separate training inputs.

In some embodiments, the voice model specific to the user is created locally on the one or more electronic devices. In order to protect the voice model, the voice model can be created (and stored) locally to the one or more electronic devices. Alternatively, the voice model can be stored on a server. In order to further protect the voice model, the voice model can also be encrypted or stored such that it is inaccessible except by a device for purposes of performing the method of the claims.

In some embodiments, the voice model specific to the user is created on a device on a same local network as the one or more electronic devices. In some embodiments, the voice model specific to the user is not transferred to or created at a server on a network remote from the one or more electronic devices. In some embodiments, the voice model specific to the user is used to generate a user-specific synthesized voice. This can be the same user-specific synthesized voice discussed earlier in conjunction with method 0816 of Figure 8, such that the characteristics of the user-specific synthesized voice also apply here (e.g., the models trained using passively collected data can then be used to create the user-specific synthesized voices used in connection with reading back of textual messages). In addition, or as an alternative, the voice model specific to the user can be used to recognize specific voices and then perform user-specific functions at a device (e.g., in conjunction with a user of a digital assistant).

In some embodiments, the method 1114 includes providing one or more non-human sound samples as a training input for the voice model that is specific to the user. The non-human sounds can include, for example, breaking glass, crunching metal, or playing instruments. For example, the method might be used to construct the voice of a robot in a movie or a videogame, where the robot's voice would be composed of sounds of crunching, shifting, or bending metal. Or the method might be used to construct the voice of an anthropomorphized piano, where the piano's voice would be constructed from the sounds made by a piano. The one or more voice models can be trained using without using voice data specific to the user. For example, the method might be used to construct a voice for an avatar in a videogame or virtual reality space, where the user corresponding to the avatar prefers to sound non-human.

Figure 12 illustrates an example communication network that can be used for collection of data (e.g., audio data, video data) for training of a voice model, in accordance with some embodiments. As illustrated in Figure 12, in some embodiments, a server 1214 is connected to multiple devices via a communication network 1202 (e.g., a wi-fi network, a Bluetooth network, etc.). The server can connect to a smart speaker 1204. The server can connect to a computer 1206 (e.g., a laptop, a desktop, etc.). The server can connect to a videoconference device 1208 (e.g., a Facebook Portal, etc.). The server can connect to a smartwatch 1210. And the server can connect to a smartphone 1212.

Any data collection performed by the devices described herein and/or any devices configured to perform or cause the performance of the different embodiments described above in reference to Figures 1A-11, hereinafter the "devices," is done with user consent and in a manner that is consistent with all applicable privacy laws. Users are given options to allow the devices to collect data, as well as the option to limit or deny collection of data by the devices. A user is able to opt-in or opt-out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A method of selectively using a user-specific synthesized voice to audibly present a textual message, the method comprising:
receiving, at a receiving electronic device associated with a receiving user, a first textual message sent by a first sending user of a first sending electronic device;
after receiving a request to have the first textual message audibly presented via the receiving electronic device:
causing, by the receiving electronic device, an audible presentation of the first textual message using a user-specific synthesized voice representing the first sending user in accordance with a determination that the receiving user is authorized to access the user-specific synthesized voice representing the first sending user;
receiving, at the receiving electronic device associated with the receiving user, a second textual message sent by a second sending user of a second sending electronic device; and
after receiving a request to have the second textual message audibly presented via the receiving electronic device:
causing, by the receiving electronic device, an audible presentation of the second textual message using a default voice.

2. The method of claim 1, wherein receiving the first textual message further comprises receiving an indication from the first sending electronic device that the receiving user is authorized to access the user-specific synthesized voice representing the first sending user.

3. The method of claim 1, wherein the request to have the first textual message audibly presented via the receiving electronic device includes a request to have the first textual message audibly presented using the user-specific synthesized voice representing the first sending user.

4. The method of claim 1, wherein causing the audible presentation of the first textual message using the user-specific synthesized voice includes:
identifying an explicit characteristic of the first textual message; and
varying a prosody of the audible presentation based on the explicit characteristic of the first textual message.

5. The method of claim 1, wherein causing the audible presentation of the first textual message using the user-specific synthesized voice includes:
identifying an implied characteristic of the first textual message; and
varying a prosody of the audible presentation based on the implied characteristic of the first textual message.

6. The method of claim 1, wherein causing the audible presentation of the first textual message using the user-specific synthesized voice includes:
identifying a characteristic of an additional textual message in a conversation that includes the first textual message; and
varying a prosody of the audible presentation based on the characteristic of the additional textual message.

7. The method of claim 1, wherein the user-specific synthesized voice is synthesized by one of:
the receiving electronic device;
the first sending electronic device;
a device other than the receiving electronic device and the first sending electronic device.

8. The method of claim 1, wherein the user-specific synthesized voice is synthesized using a voice model that is encrypted to disallow uses of the voice model for purposes other than audibly presenting textual messages.

9. The method of claim 1, wherein the determination that the receiving user is authorized to access the user-specific synthesized voice representing the first sending user includes authenticating an identity of the receiving user.

10. The method of claim 1, wherein the determination that the receiving user is authorized to access the user-specific synthesized voice representing the first sending user is based on a strength of a relationship between the receiving user and the first sending user.

11. The method of claim 1, wherein the determination that the receiving user is authorized to access the user-specific synthesized voice representing the first sending user includes determining that the first sending user has granted the receiving user permission to access the user-specific synthesized voice.

12. The method of claim 1, wherein causing the audible presentation of the second textual message using the default voice includes foregoing determining whether the receiving user is authorized to access a user-specific synthesized voice representing the second sending user;
and optionally, wherein the second textual message comprises a textual message sent on behalf of a non-human entity
and/ or optionally wherein the receiving user has requested to have textual messages audibly presented using the default voice.

13. A non-transitory, computer-readable storage medium including instructions that, when executed by a receiving electronic device associated with a receiving user, cause the receiving electronic device to:
receive a first textual message sent by a first sending user of a first sending electronic device;
after receiving a request to have the first textual message audibly presented via the receiving electronic device:
cause an audible presentation of the first textual message using a user-specific synthesized voice representing the first sending user in accordance with a determination that the receiving user is authorized to access the user-specific synthesized voice representing the first sending user;
receive a second textual message sent by a second sending user of a second sending electronic device; and
after receiving a request to have the second textual message audibly presented via the receiving electronic device:
cause an audible presentation of the second textual message using a default voice.

14. The non-transitory, computer-readable storage medium of claim 13 including instructions that, when executed by a receiving electronic device associated with a receiving user, cause the receiving electronic device to perform the method of any one of claims 2 to 12.

15. A receiving electronic device associated with a receiving user and comprising one or more processors, wherein the processors include instructions that, when executed, cause the receiving electronic device to:
receive a first textual message sent by a first sending user of a first sending electronic device;
after receiving a request to have the first textual message audibly presented via the receiving electronic device:
causing an audible presentation of the first textual message using a user-specific synthesized voice representing the first sending user in accordance with a determination that the receiving user is authorized to access the user-specific synthesized voice representing the first sending user;
receiving a second textual message sent by a second sending user of a second sending electronic device; and
after receiving a request to have the second textual message audibly presented via the receiving electronic device:
causing an audible presentation of the second textual message using a default voice.
